(19) Europäisches Patentamt / European Patent Office / Office européen des brevets

(11) **EP 2 176 633 B1**

(12) **FASCICULE DE BREVET EUROPEEN**

(45) Date de publication et mention de la délivrance du brevet:
**30.08.2017  Bulletin 2017/35**

(21) Numéro de dépôt: **08775271.3**

(22) Date de dépôt: **21.07.2008**

(51) Int Cl.:
***G01M 11/02*** *(2006.01)*

(86) Numéro de dépôt international:
**PCT/EP2008/059548**

(87) Numéro de publication internationale:
**WO 2009/010593 (22.01.2009 Gazette 2009/04)**

(54) **PROCÉDÉ D'ESTIMATION D'AU MOINS UNE DÉFORMATION DU FRONT D'ONDE D'UN SYSTÈME OPTIQUE OU D'UN OBJET OBSERVÉ PAR LE SYSTÈME OPTIQUE ET DISPOSITIF ASSOCIÉ**

VERFAHREN ZUR SCHÄTZUNG MINDESTENS EINER DEFORMATION DER WELLENFRONT EINES OPTISCHEN SYSTEMS ODER EINES DURCH DAS OPTISCHE SYSTEM BEOBACHTETEN OBJEKTS UND DIESBEZÜGLICHE EINRICHTUNG

METHOD OF ESTIMATING AT LEAST ONE DEFORMATION OF THE WAVE FRONT OF AN OPTICAL SYSTEM OR OF AN OBJECT OBSERVED BY THE OPTICAL SYSTEM AND ASSOCIATED DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **19.07.2007   FR 0756615**

(43) Date de publication de la demande:
**21.04.2010   Bulletin 2010/16**

(73) Titulaire: **Office National d'Etudes et de Recherches Aérospatiales (ONERA)
91120 Palaiseau (FR)**

(72) Inventeurs:
 • **CASSAING, Frédéric
  F-75015 Paris (FR)**
 • **MOCOEUR, Isabelle
  F-94260 Fresnes (FR)**
 • **MUGNIER, Laurent
  F-92190 Meudon (FR)**

(74) Mandataire: **Regimbeau
  20, rue de Chazelles
  75847 Paris Cedex 17 (FR)**

(56) Documents cités:
  **US-A1- 2004 052 426**

**Description**

DOMAINE TECHNIQUE GENERAL

La présente invention est relative à un procédé et à un dispositif pour l'estimation d'au moins une déformation du front d'onde d'un système optique ou d'un objet observé par le système optique.

L'invention trouve notamment application dans le domaine de l'imagerie à haute résolution et de la mise en forme de faisceaux.

Les déformations peuvent être introduites par un système optique et/ou par le milieu de propagation de la lumière. En outre, lorsque le système optique est dégradé par des déformations, l'invention permet l'estimation (restauration) de l'objet observé.

ETAT DE LA TECHNIQUE

La qualité des images obtenues par un instrument optique est souvent dégradée à cause de la présence d'aberrations ou d'autres perturbations sur le trajet de l'onde provenant de l'objet observé.

En effet, ces déformations de phase présentes dans la pupille de l'instrument, atténuent la fonction de transfert.

Plusieurs dispositifs appelés Analyseurs de Surface d'Onde (ASO) ont été développés pour mesurer la phase pupillaire en la transformant en variations d'intensité mesurables.

Utilisés dans un système fonctionnant en boucle fermée avec un élément pouvant contrôler la phase de l'onde reçue (miroir déformable, déphaseurs, etc.), ces dispositifs permettent de s'affranchir des perturbations observées. Par ailleurs, les informations de l'ASO peuvent être utilisées pour restaurer (estimer) l'objet observé.

Il existe aujourd'hui une large gamme d'ASO, on pourra notamment se référer à G. Rousset, « Wave-front sensors, Adaptive Optics in Astronomy », sous la direction de F. Roddier, chap. 5, pp. 91-130, Cambridge University Press, Cambridge 1999.

Pour corriger les aberrations d'un système optique à pupille quelconque, c'est-à-dire soit monolithique, soit constituée d'un ensemble de sous pupilles jointives ou non, les techniques dites plan focal apparaissent comme des solutions séduisantes.

En effet, contrairement aux dispositifs plan pupille qui doivent extraire une partie de la lumière vers une optique auxiliaire (ce qui complexifie le montage optique), les méthodes plan focal permettent la mesure des déformations du front d'onde ainsi que la combinaison de toutes les sous-pupilles en une seule trame, et ce avec un design opto-mécanique simple.

Puisque les instruments imageurs sont naturellement équipés d'une caméra en plan focal, il est avantageux d'utiliser un ASO au voisinage de cette caméra pour mesurer les déformations de l'instrument Un dispositif plan focal est divulgué dans le document US2004/0052426. Si la pupille d'entrée de l'instrument est connue, la technique dite du « *Phase Retrieval* » permet d'estimer les aberrations qui sont les plus compatibles avec les contraintes connues dans le plan pupille et dans le plan focal, et ce avec la seule donnée de l'image focale d'un point source. Cependant, cette technique doit être employée pour des instruments présentant des configurations pupillaires non centro-symétriques afin d'estimer les déformations (ou la « phase aberrante ») sans ambiguïté de signe.

Dans le cas contraire, ou pour une observation sur objet étendu, la seule donnée de l'image focale est insuffisante pour retrouver de manière unique les aberrations.

Dans un cas général (objet inconnu et/ou configuration quelconque), il est possible de lever l'indétermination sur la phase en utilisant plusieurs images dites de diversité obtenues au voisinage du plan focal en présence d'une déformation (ou modulation) de phase parfaitement connue ; le plus souvent, il s'agit d'une (voire de plusieurs) image(s) défocalisée(s) pour des raisons de simplicité de mise en oeuvre.

L'estimation de la phase aberrante est alors fondée sur une approche qui consiste à choisir les aberrations qui minimisent un critère de distance aux images.

On recherche donc les déformations qui produisent un modèle d'image le plus proche des données, la minimisation étant généralement effectuée dans le plan de Fourier.

Cette méthode dite de la diversité de phase, en anglais, « *phase diversity* », est communément appliquée à la mesure de phase sur objet étendu.

Toutefois, cette méthode permet d'estimer l'objet observé. En d'autres termes, on restaure l'objet observé en s'affranchissant des déformations.

Cependant, que ce soit pour l'estimation de l'objet ou des aberrations, une telle méthode nécessite des temps de calcul importants qui sont difficilement compatibles avec les exigences d'un système d'estimation en temps-réel.

En effet, si N est le nombre d'images acquises par diversité, 2N transformées de Fourier sont au minimum effectuées à chaque itération, sachant qu'une cinquantaine d'itérations peuvent être nécessaires en pratique.

Plusieurs travaux ont donc été menés afin de réduire le nombre d'itérations nécessaires :

- tout d'abord en essayant de trouver de meilleurs algorithmes de minimisation pour des tests de simulation effectués sur des configurations monolithiques,
- puis par modification du critère utilisé, avec des études réalisées pour un télescope monolithique ou segmenté.

Ces procédés nécessitent plusieurs itérations avant de converger et présentent donc des temps de calcul qui augmentent avec le nombre d'aberrations à rechercher. Les temps de calcul pour estimer l'objet observé sont par conséquent également importants.

La mesure des faibles aberrations (c'est-à-dire résiduelles) en boucle fermée a parfois été réalisée mais seulement pour des configurations monolithiques (c'est-à-dire pour la mesure des déformations d'ordre supérieur à la défocalisation) et sans aucune caractérisation fine des performances du capteur.

Tous ces procédés itératifs nécessitent donc des puissances de calcul significatives.

Or l'utilisation de processeurs adéquats, ne posant a priori pas de problème pour des instruments au sol, devient critique pour des applications embarquées où la puissance du calculateur est limitée.

## PRESENTATION DE L'INVENTION

L'invention vise à estimer des déformations d'un front d'onde d'un système d'observation ou de l'objet observé par le système à partir d'une ou plusieurs images prises au voisinage du plan focal d'un système d'observation au moyen d'un procédé non itératif mais purement analytique.

Ainsi selon un premier aspect, l'invention concerne un procédé d'estimation d'au moins une déformation du front d'onde d'un système d'observation ou d'un objet observé par le système.

En particulier, le procédé de l'invention est caractérisé en ce que : on acquiert, au voisinage du plan focal du système d'observation, au moins une image de diversité dans au moins un plan de diversité, l'image de diversité comprenant une déformation de diversité connue ; et en ce que dans chaque plan de diversité ; on détermine un modèle d'image fondé sur au moins: une décomposition de la transmission pupillaire de la pupille physique du système en une pluralité de sous-pupilles ; une décomposition sur chaque sous-pupilles de la déformation recherchée sous la forme d'au moins une déformation connue pondérée par des coefficients à déterminer ; une détermination de la fonction de transfert optique du système par autocorrélation de la transmission pupillaire de sa pupille ; la linéarisation, dans dite fonction de transfert optique, de chacun des termes de l'autocorrélation en fonction des coefficients de la déformation recherchée, la linéarisation étant effectuée au voisinage de la déformation de diversité connue ; l'objet observé et du bruit ; et en ce que à partir du ou des modèle(s) d'image(s) déterminé(s) et de la ou les image(s) acquise(s), on estime la ou les déformation(s) recherchée(s) ou l'objet observé.

Le modèle d'image est en outre fonction de l'objet observé par le système et de la fonction de transfert linéarisée.

Le procédé de l'invention s'applique à un objet étendu et ne nécessite aucune itération minimisant par conséquent le temps de calcul.

Le procédé de l'invention est fondé sur la linéarisation de la fonction de transfert du système d'observation. Une telle linéarisation permet d'obtenir une estimation des déformations ou de l'objet observé.

En particulier, la fonction de transfert du système d'observation est linéarisée dans chaque plan de diversité et est au moins fonction de la ou les déformation(s) recherchée(s) et de la déformation de diversité connue associée à chaque plan de diversité.

Avec les solutions telles que connues il est possible d'estimer les déformations mais avec des temps calcul conséquent du fait que dans ces solutions l'estimation est fondée sur la minimisation d'un critère de distance, effectuée de manière itérative. En outre, avec ces solutions il n'est pas possible d'estimer directement l'objet observé en une itération.

Le fait d'utiliser un modèle d'image qui dépend de la fonction de transfert du système linéarisée dans chaque plan de diversité du système permet de simplifier le système d'équations à deux inconnues (l'objet et les perturbations) afin de résoudre sans itération, ou l'objet ou les perturbations (la phase).

De manière préférée, le système d'observation est un système d'observation optique et la fonction de transfert du système est la fonction de transfert optique, imagerie acoustique.

En outre, selon un second aspect, l'invention concerne un dispositif d'estimation d'au moins une déformation du front d'onde d'un système d'observation ou d'un objet observé par le système.

Le dispositif de l'invention est caractérisé en ce qu'il comprend des moyens pour acquérir, au voisinage du plan focal du système d'observation, au moins une image de diversité dans au moins un plan de diversité, l'image de diversité comprenant une déformation de diversité connue ; et en ce que dans chaque plan de diversité le dispositif comprend : des moyens pour déterminer un modèle d'image fondé sur au moins : une décomposition de la pupille physique du système en une pluralité de sous-pupilles ; une décomposition sur chaque sous-pupilles de la déformation recherchée sous la forme d'au moins une déformation connue pondérée par des coefficients à déterminer ; une détermination de la fonction de transfert du système par autocorrélation de sa pupille ; la linéarisation de chacun des termes de l'autocorrélation en fonction des coefficients de la déformation recherchée, la linéarisation étant effectuée au voisinage de la déformation de diversité connue ; l'objet observé et du bruit ; et en ce que à partir du ou des modèle(s) d'image(s) déterminé(s) et de la ou les image(s) acquise(s), on estime la ou les déformation(s) recherchée(s) ou l'objet observé.

Du fait que le dispositif est adapté pour mettre en oeuvre un procédé ne nécessitant pas d'itération, il respecte de fortes contraintes temps réel et s'intègre parfaitement dans des systèmes embarqués.

Le dispositif de l'invention peut être utilisé en boucle fermée en conjonction avec des moyens de correction, pour la correction temps réel des déformations du front d'onde d'un système optique et/ou pour estimer en outre l'objet observé par le système d'observation.

Enfin, l'invention concerne selon un troisième aspect un système embarqué comprenant des moyens pour mettre en oeuvre le procédé selon le premier aspect de l'invention.

PRESENTATION DES FIGURES

D'autres caractéristiques et avantages de l'invention ressortiront encore de la description qui suit laquelle est purement illustrative et non limitative et doit être lue en regard des dessins annexés sur lesquels :

- la figure 1 illustre un dispositif d'estimation des déformations du front d'onde conforme à l'invention ;
- la figure 2 illustre une variante du dispositif de l'invention pour l'estimation de l'objet observé ;
- la figure 3 illustre une configuration à trois sous-pupilles ;
- les figures 4a et 4b illustrent respectivement une configurations à trois sous-pupilles d'un système optique et la fonction de transfert associée à aberrations nulles ;
- la figure 5 illustre un premier mode de réalisation du procédé de l'invention pour l'estimation des déformations ;
- la figure 6 illustre un second mode de réalisation du procédé de l'invention pour l'estimation des déformations ;
- la figure 7 illustre l'estimation de l'objet observé pour une configuration à 18 sous-pupilles approximant un télescope monolithique.

DESCRIPTION D'UN OU PLUSIEURS MODES DE REALISATION ET DE MISE EN OEUVRE

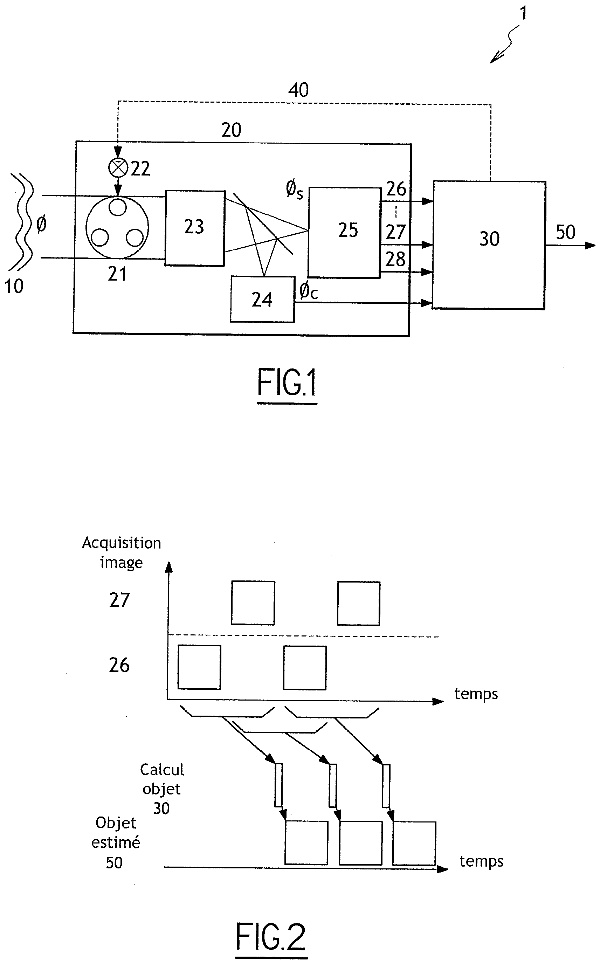

La figure 1 illustre un dispositif d'estimation des déformations du front d'onde d'un système optique ou d'un objet observé par un système optique.

Les déformations incidentes et/ou de positionnement 10 d'un système optique 20 (représenté ici à titre d'exemple comme étant un instrument d'imagerie optique) sont estimées par un procédé analytique implémenté dans des moyens de calcul 30 du dispositif 1.

Les aberrations ainsi estimées 40 peuvent alors éventuellement être re-dirigées vers le système optique 20 pour être corrigées.

Le procédé analytique permet également de restaurer l'objet 50.

Notons que l'instrument d'observation peut être monolithique ou à pupille segmentée 21.

Dans le cas à pupille segmentée, le dispositif peut être en aval d'un système de recombinaison des faisceaux 23.

Un senseur 25, installé ici au voisinage d'un capteur d'imagerie 24, génère au moins une image de diversité 26 dans des conditions de phase parfaitement connues.

On note que si l'objet est inconnu, plusieurs images de diversité 27, 28, sont nécessaires.

Une image de diversité est une image dans laquelle on ajoute une déformation de diversité connue.

Du fait des aberrations présentes sur le trajet optique de la lumière, la phase aberrante sur le capteur d'imagerie, notée $\phi_C$, peut être différente de celle vue par le senseur, notée $\phi_S$.

L'objet observé pouvant être quelconque, le procédé de mesure ne nécessite pas l'introduction d'une source de référence ; les images sont donc directement issues de l'objet observé.

Elles sont acquises aux moyens d'un ou plusieurs capteurs, par exemple composés de matrices de type CCD ou CMOS, de préférence avec un échantillonnage à Shannon.

Il est à noter qu'à partir d'un objet observé on peut :

- acquérir une image à partir de laquelle on va ajouter une ou plusieurs déformation(s) connue(s) de manière à obtenir les images de diversité,
- acquérir simultanément (si possible ou au pire pendant un temps suffisamment court) autant d'image de diversité que l'on souhaite.

La mesure des aberrations du front d'onde repose sur l'utilisation des images acquises qui contiennent la phase aberrante $\phi_S$ ainsi que les déformations de diversité.

Les aberrations ainsi estimées 40 peuvent alors éventuellement être corrigées par des moyens de correction 22, par exemple un miroir déformable.

Au cours du procédé on modélise les images acquises en fonction des déformations recherchées, de l'objet, ainsi que de l'ensemble des paramètres physiques pertinents comme la modulation de phase introduite et les caractéristiques optiques de détection du système optique.

Par la suite, nous allons nous placer dans un plan de diversité noté d introduisant une phase $\phi_d$ parfaitement connue et nous considérerons des déformations produisant une phase $\phi_a$ (respectivement $\phi_{dn}$ et $\phi_{an}$ sur chaque sous-pupille).

Il est entendu par plan de diversité d, l'endroit on l'on acquiert une image de diversité.

Il s'agit par conséquent d'une image focale en présence d'une éventuelle aberration additionnelle connue, comme par exemple une défocalisation. Un plan de diversité peut dans ce cas là être un plan extra-focal, la déformation de diversité connue est alors dans ce cas là une défocalisation.

Toutefois, la déformation de diversité peut-être quelconque.

La figure 2 illustre un mode de réalisation pour l'estimation de l'objet observé.

Au moins deux images de diversité sont générées 25, soit sur des capteurs séparés, soit sur le même capteur. Dans ce dernier cas, l'acquisition des images peut être faite de manière séquentielle. La figure 2 illustre un chronogramme de l'acquisition des images de manière séquentielle. Pour ce faire, le bloc 25 fait intervenir dans le train optique tout système permettant d'introduire une déformation de diversité. Un tel système peut être une membrane, un miroir bimorphe, un système électro-optique, etc.

Le procédé d'estimation de l'objet observé est mis en oeuvre au moyen d'un circuit imprimé dédié qui prend en compte les paramètres du système optique (forme de la pupille, longueur d'onde d'observation, etc.) et qui permet d'estimer l'objet observé 50 sur toutes les trames de deux images (voir figure 2).

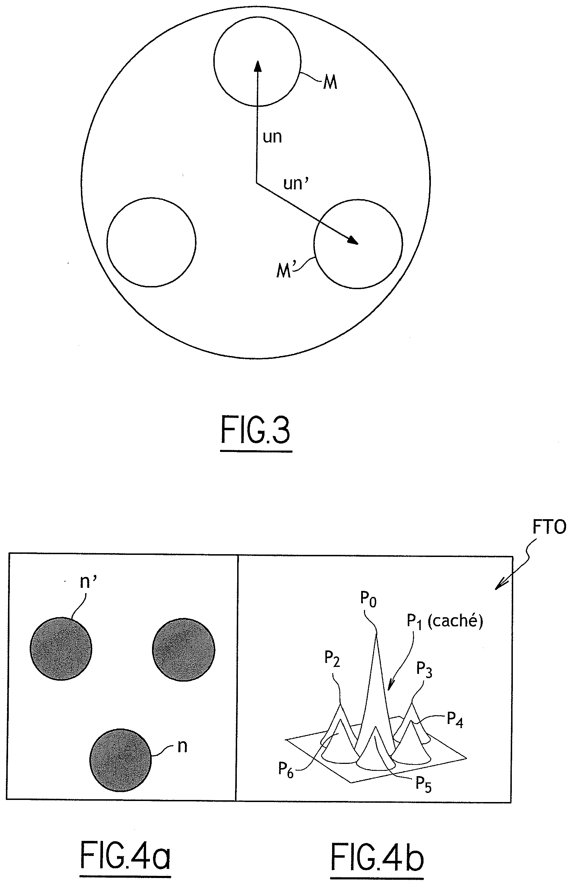

La figure 3 illustre une configuration à $N_T=3$ sous-pupilles.

Soit p la transmission de la configuration pupillaire, composée de $N_T$ sous-pupilles placées à la position $u_n$ et présentant chacune une phase notée $\phi_n$.

La transmission pupillaire est donnée par :

$$p_d = \sum_{n=1}^{N_T} \Pi \exp j(\phi_{dn}+\phi_{an}) * \delta_{u_n} \, , \, (1)$$

avec $j^2 =$ -1.

On note que la décomposition ci-dessus mentionnée (cf. équation (1)) est également effectuée même si l'instrument ne comporte qu'une seule pupille.

Si la phase aberrante est nulle, la transmission de la pupille est parfaite et vaut 1.

Il est à noter que la forme de la pupille ou des sous-pupilles peut être quelconque, par exemple circulaire, hexagonale ou carré, etc.

Les phases aberrantes peuvent être exprimées dans différentes bases de déformations connues, par exemple la base des polynômes de Zernike :

$$\varphi_{an}(\mathbf{r}) = \sum_{k=1}^{N_Z} a_{kn} Z_k(\mathbf{r}) \, , \, (2)$$

avec $a_{kn}$ désignant les aberrations d'ordre k sur la sous-pupille n, $N_Z$, le nombre de polynômes considérés (c'est-à-dire le nombre de coefficients recherchés).

Les équations (1) et (2) permettent de décomposer la pupille et la phase dans une base connue à l'avance. Il reste alors à chercher les coefficients $a_{kn}$ de cette double décomposition.

Par la suite, on notera **a** le vecteur de taille $N_a \times 1$ dont les éléments $a_{kn}$ sont les aberrations recherchées, $N_a$ étant le nombre d'inconnues cherchées égal à $N_T \times N_Z$. Par exemple, pour un instrument à six sous-pupilles ($N_T=6$) sur lequel on recherche les trois premiers ($N_Z=3$) ordres de Zernike on a $N_a = 18$.

Dans le plan fréquentiel, la fonction de transfert optique $F_d$ obtenue au d$^{\text{ième}}$ plan de diversité est donnée par l'autocorrélation de la pupille :

$$(p \otimes p)_d = F_d = \sum_{n=1}^{N_T} \sum_{n'=1}^{N_T} F_{d,n,n'} \Psi(a_{kn}, a_{kn'}, d) * \delta_{u_n - u_{n'}} . \, (3)$$

Il est à noter que si $N_T$ est le nombre de sous-pupilles, la fonction de transfert optique présente un pic central, somme de $N_T$ pics individuels plus $N_T(N_T-1)$ pics satellitaires. En outre, il est à noter que l'on peut également décomposer une pupille en une pluralité de sous-pupilles.

Chaque pic $P_0$, $P_1$, ..., $P_6$, dans le cas où $N_T=3$, de la fonction de transfert optique telle qu'illustrée par la figure 4b (le pic $P_1$ qui est un pic satellite est masqué par le pic central $P_0$), résulte de l'intercorrélation de la pupille n avec la pupille n' et est le produit de deux fonctions :

- une fonction $F_{d,n,n'}$ contenant seulement les aberrations de diversité d ($F_{d,n,n'}$ représente donc le pic d'intercorrélation non aberré),
- une fonction $\Psi$ dépendant des aberrations recherchées et de la diversité.

Si la phase sur le senseur $\phi_S$ est faible, il est possible d'écrire chaque pic de la fonction de transfert optique comme :

$$F_d = \sum_{n=1}^{N_T} \sum_{n'=1}^{N_T} F_{d,n,n'} \left[ 1 + \Psi_a(a_{kn}, a_{kn'}, d) \right] * \delta_{u_n - u_{n'}}, \quad \text{avec} \quad \Psi_a = \Psi - 1, \quad (4)$$

que l'on peut linéariser par rapport à un vecteur $\mathbf{x}$ dépendant des aberrations. Cette linéarisation peut s'effectuer selon deux cas.

Cas n°1

Si l'on recherche pistons et modes supérieurs, on peut développer l'expression de $\Psi_a$ au premier ordre au voisinage des aberrations de diversité de la manière suivante :

$$F_d \approx \sum_{n=1}^{N_T} \sum_{n'=1}^{N_T} F_{d,n,n'} * \delta_{u_n - u_{n'}} + \left[ \sum_{n=1}^{N_T} \sum_{n'=1}^{N_T} F_{d,n,n'} \Psi_a(d) * \delta_{u_n - u_{n'}} \right] \bullet \mathbf{x}, \; avec \; \mathbf{x} = \mathbf{a}, \quad (5)$$

où « • » désigne un produit matriciel.

Cas n°2

Si seuls les pistons sont appliqués/recherchés, alors l'expression de la fonction de transfert optique dans chaque plan de diversité est exacte et a pour expression :

$$F_d = \left[ \sum_{n=1}^{N_T} \sum_{n'=1}^{N_T} F_{d,n,n'} * \delta_{u_n - u_{n'}} \right] \bullet \mathbf{x}, \; avec \; \mathbf{x} = \exp(j\boldsymbol{\alpha}), \quad (6),$$

$\alpha$ étant un ensemble de combinaisons linéaires des $a_{kn}$ et $a_{kn'}$.

Il existe donc un lien direct entre la forme de la fonction de transfert optique et les déformations que l'on recherche.

Une fois le vecteur $\mathbf{x}$ déterminé par le procédé décrit ci-dessus et compte tenu des deux cas explicités ci-dessus, les aberrations se déduisent de $\mathbf{x}$ par les équations (5) et (6).

La transformée de Fourier de l'image obtenue au d[ième] plan de diversité est donnée par :

$$\widetilde{i}_d = \widetilde{o} F_d + b_d, \quad (7)$$

avec $\sim$ l'opérateur de transformée de Fourier, $\widetilde{o}$ représente le spectre de l'objet dans le plan fréquentiel et $b_d$ le bruit inhérent à l'acquisition de l'image $i_d$.

Le principe de mesure repose sur le fait que l'on va chercher les déformations et/ou l'objet produisant un modèle le plus proche des images acquises, ce qui revient à minimiser un critère de distance J entre le modèle reconstruit et les données obtenues dans chaque plan. Le critère est par exemple quadratique.

Dans le domaine de Fourier, ce critère s'écrit :

$$J(a,o) = \sum_{\nu=1}^{N_f} \sum_{d=1}^{N_d} \left| \widetilde{i}_d(\upsilon) - F_d(a,\upsilon)\widetilde{o}(\upsilon) \right|^2 \text{ , (8)}$$

où $N_d$ est le nombre de plans de diversité, $N_f$ le nombre de fréquences sur lesquelles est définie la fonction de transfert optique $i_d$ l'image acquise au $d^{\text{ième}}$ plan et $F_d(a,\upsilon)\widetilde{o}(\upsilon)$ le modèle d'image dans le domaine fréquentiel.

Bien que l'objet soit généralement inconnu, il est possible de l'exprimer à phase aberrante fixée et par conséquent de s'affranchir de ce dernier. En effet, l'équation (8) est non linéaire en phase mais quadratique en objet. Ainsi à phase fixée, il existe une solution analytique pour l'objet qui est donnée par :

$$\hat{\widetilde{o}}(a,\upsilon) = \frac{\sum_{d=1}^{N_d} F_d^*(a,\upsilon)\widetilde{i}_d(\upsilon) + \sigma^2 \dfrac{\widetilde{o}_m(\upsilon)}{S_0(\upsilon)}}{\sum_{d=1}^{N_d} \left| F_d(a,\upsilon) \right|^2 + \beta \dfrac{\sigma^2}{S_0(\upsilon)}} \text{ , (9)}$$

où $F_d^*$ représente le conjugué de $F_d$ ; $\dfrac{\widetilde{o}_m(\upsilon)}{S_0(\upsilon)}$ et $\beta \dfrac{\sigma^2}{S_0(\upsilon)}$ sont des termes liés à une éventuelle régularisation sur l'objet (s'il n'y a pas de régularisation, ces termes sont égaux à zéro); en outre $\beta \dfrac{\sigma^2}{S_0(\upsilon)}$ est le rapport des densités spectrales de puissance du bruit ($\sigma^2$) et de l'objet ($S_0(\upsilon)$) pondéré par un coefficient $\beta$ (par défaut $\beta=1$) et $\widetilde{o}_m$ représente l'objet moyen.

A partir de l'équation (8) il est possible d'obtenir un nouveau critère **J'** qui ne dépend plus explicitement que des déformations recherchées :

$$J'(a) \propto \sum_{\upsilon=1}^{N_f} \frac{\left| \sum_{d=1}^{N_d} \sum_{d'=1}^{d-1} \widetilde{i}_d(\upsilon)F_{d'}(a,\upsilon) - \widetilde{i}_{d'}(\upsilon)F_d(a,\upsilon) \right|^2}{\sum_{d=1}^{N_d} \left| F_d(a,\upsilon) \right|^2 + \beta \dfrac{\sigma^2}{S_0(\upsilon)}} + \text{Reg}(\widetilde{o}_m), \text{ (10)}$$

avec $\text{Reg}(\widetilde{o}_m)$ un terme de régularisation dépendant de l'objet moyen.

De manière générale, la minimisation du critère J' est effectuée itérativement avec des temps de calcul significatifs.

En remplacement de l'algorithme itératif, le procédé de mesure utilise un algorithme analytique développé dans l'hypothèse des faibles phases $\phi_S$ sur l'ASO.

En particulier, cet algorithme est utilisé autour d'un point de fonctionnement, c'est-à-dire autour de $\phi_S$ - $\phi_C$, ou par exemple à phase aberrante $\phi$ faible (point de fonctionnement proche de zéro).

Ainsi, dans le cadre de l'hypothèse $\phi_S$ faible, il est possible de :

- développer le dénominateur du critère J' à l'ordre zéro, ce qui revient à le considérer comme un terme de pondération indépendant des déformations recherchées,
- exprimer le modèle de formation d'image comme une fonction simple des aberrations, ce qui revient à linéariser dans chaque plan les pics de la fonction de transfert optique au voisinage des aberrations fixes de diversité, en d'autres termes cela revient à linéariser la fonction de transfert optique donnée par l'équation (3).

Contrairement aux techniques connues, la linéarisation de chaque pic permet de prendre en compte des configurations compactes et redondantes (dont les pics de la fonction de transfert optique se recouvrent).

On peut exprimer ce critère linéarisé comme :

$$J''(\mathbf{a}) = \sum_{\upsilon=1}^{N_f} \left\| \mathbf{A}.\mathbf{x} - \mathbf{B} \right\|^2 . \quad (11)$$

Soit $N_i$ le nombre de pixels dans l'image, typiquement $128 \times 128$ ou $256 \times 256$.

La fonction de transfert numérisée, c'est-à-dire définie dans un espace compatible avec celui de l'image enregistrée, donc pixellisée, est définie sur $N_f$ fréquences, avec $N_f \leq N_i$. La matrice **A** est donc de taille $N_f \times N_a$ et **B** est de taille $N_f \times 1$.

Comme ce nouveau critère est quadratique, les déformées du front d'onde peuvent s'exprimer de manière simple :

$$\hat{x} = \left[ \Re\{\mathbf{A}^{\mathbf{H}}\mathbf{A}\} \right]^{-1} . \Re\{\mathbf{A}^{\mathbf{H}}\mathbf{B}\}, \quad (12),$$

où $\Re$ désigne l'opérateur partie réelle.

Les aberrations recherchées se déduisent ensuite de x. Pour affiner le critère, il est également possible :

- de prendre en compte des poids différents entre les images ;
- d'introduire un filtrage sur les images ;
- d'inclure une gestion des effets de bord pour des images étendues ;
- d'inclure une recherche des basculements différentiels entre les images de diversité ;
- d'ajouter des termes de régularisation.

Tout « raffinement » effectué se traduit par une modification des matrices **A** et **B** qui vont intervenir, mais le principe de base du procédé de mesure est inchangé.

Ci-dessus nous avons vu qu'à partir du critère on peut retrouver les aberrations ; en effet nous nous sommes affranchi de l'objet dans l'équation (9) en l'exprimant à phase aberrante fixée et en le réinjectant dans le critère initial donné par l'équation (8).

Exemple 1

Si l'on recherche les pistons et d'autres aberrations, nous avons montré, lors du cas n°1, précédemment présenté, que l'on pouvait développer la fonction de transfert optique au premier ordre en **x = a,** ainsi on pose :

$$F_d \approx L_d + M_d \text{ avec } L_d = \sum_{n=1}^{N_T} \sum_{n'=1}^{N_T} \Psi_{d,n,n'} \Psi_a(d) * \delta_{u_n - u_{n'}} \text{ et } M_d = \sum_{n=1}^{N_T} \sum_{n'=1}^{N_T} \Psi_{d,n,n'} * \delta_{u_n - u_{n'}}$$

$$(13)$$

avec $L_d$ la partie linéaire en x et $M_d$ la partie fixe.

L'expression des matrices **A** et **B** est alors :

$$\mathbf{A} = \sum_{d=1}^{N_d} \sum_{d'=1}^{d-1} \mathbf{A}_{dd'} - \mathbf{A}_{d'd} \qquad \mathbf{B} = \sum_{d=1}^{N_d} \sum_{d'=1}^{d-1} \mathbf{B}_{d'd} - \mathbf{B}_{dd'} \text{ , } (14)$$

avec

$$\mathbf{A}_{dd'} = \frac{\tilde{i}_d \mathbf{L}_{\mathbf{d'}}}{\left[ \sum_{d=1}^{N_d} \left| \mathbf{M}_{\mathbf{d}}(0) \right|^2 \right]^{1/2}} \text{ , } (15)$$

et

$$\mathbf{B}_{dd'} = \frac{\widetilde{i}_d \mathbf{M}_{d'}}{\left[\sum_{d=1}^{N_d} |\mathbf{M}_d(0)|^2\right]^{1/2}} \ , \ (16)$$

Avec l'équation (12), le coût de calcul est bien moins important que dans le cas itératif.

En effet, l'inversion de la matrice $\mathbf{A}^H\mathbf{A}$ n'est pas dimensionnante puisque de taille $N_a \times N_a$ et que $N_a << N_f$; le temps de calcul se résume alors au temps nécessaire pour effectuer les $N_d$ transformées de Fourier.

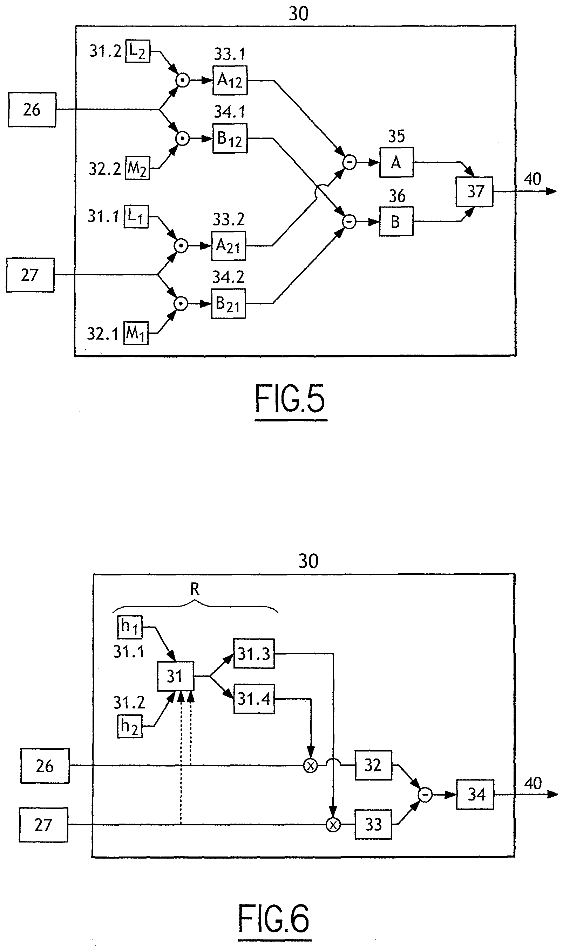

La figure 5 illustre l'estimateur 30 (comme noté sur la figure 1). Nous y détaillons, pour un cas non limitatif à deux images de diversité notées 26 et 27, un mode de réalisation, celui permettant l'estimation des pistons et modes supérieurs (développement au premier ordre en fonction de **a,** donc).

Le procédé d'estimation des aberrations effectue dans chaque plan de diversité :

- le calcul des matrices $\mathbf{L_1}, \mathbf{L_2}$ 31 et $\mathbf{M_1}, \mathbf{M_2}$ 32,
- $\mathbf{L_1}$ et $\mathbf{L_2}$ sont ensuite multipliées à la transformée de Fourier des images 27 et 26,
- le symbole $\odot$ désignant une opération linéaire, comme le produit terme à terme ou une succession d'opérations linéaires,
- le même type d'opération est effectué avec $\mathbf{M_1}$ et $\mathbf{M_2}$. On obtient ainsi en sortie les matrices $\mathbf{A}_{12}$, $\mathbf{A}_{21}$, 33 de taille $N_f \times N_a$ ainsi que les matrices $\mathbf{B}_{12}$, $\mathbf{B}_{21}$ 34 de taille $N_f \times 1$,
- d'après l'équation 10, les matrices résultantes sont ensuite soustraites pour former les matrices **A** 35 et **B** 36,
- l'opération 37 calcule le terme $\left[\Re\{\mathbf{A}^H\mathbf{A}\}\right]^{-1}.\Re\{\mathbf{A}^H\mathbf{B}\}$ d'après l'équation 11,
- comme dans le cadre de ce mode de réalisation **a = x,** les aberrations recherchées sont directement obtenues en sortie de l'opérateur 37.

Exemple 2

Le processus d'estimation des aberrations décrit au dessus peut également être vu d'une autre manière.

En effet, en partant de l'expression des aberrations estimées (voir équation 12), il est possible d'exprimer analytiquement certains termes.

En particulier, on peut retrouver les aberrations par l'application d'un reconstructeur R à un signal d'erreur issu des images de diversité ; R est alors pré-défini et calculé une fois pour toutes pour l'ensemble des paramètres physiques définissant le système ; il est à noter que dans ce cas, l'objet initialement pris en compte est un objet moyen, nécessitant une connaissance a *priori* des scènes qui vont être observées.

On note toutefois que dans le cadre d'une utilisation en boucle fermée, cet objet peut être ajusté au fur et à mesure que la boucle se stabilise.

Dans ce cas, on peut simplifier l'équation (12). Les déformations du front d'onde s'expriment alors comme

$$\hat{\mathbf{x}} = \mathbf{R.I} \ , \ (17)$$

où $\mathbf{I} = [\widetilde{i}_1, \widetilde{i}_2, ..., \widetilde{i}_d]$ désigne une concaténation de matrices, **I** est par conséquent de taille $N_d N_f$ dont les éléments $\widetilde{i}_d$ sont les transformées de Fourier des images de diversité, **R** est le reconstructeur, de taille $N_a \times N_f N_d$.

Le procédé d'estimation correspondant, illustré figure 6 dans un cadre non limitatif à deux images, se déroule en deux temps.

Dans un premier temps, le reconstructeur est déterminé à l'avance : les modèles qui seront associés aux images, de taille $N_a \times N_f$, sont calculés sous l'hypothèse des faibles phase $\phi_S$ sur l'ASO par combinaison 31 des fonctions de transfert 31.1 et 31.2 obtenues dans les deux plans de diversité. On obtient alors deux matrices 31.3 et 31.4.

Dans un deuxième temps, le sous-reconstructeur 31.3 est multiplié matriciellement à la transformée de Fourier de l'image 27 ; la même opération est effectuée entre la matrice 31.4 et l'image 26.

Les deux matrices résultantes 32 et 33 sont ensuite soustraites de manière à obtenir la fonction **x,** qui servira à déduire en 34 les aberrations recherchées 40.

Par la suite, les images peuvent également servir à ajuster l'objet utilisé dans le reconstructeur (d'où les pointillés représentés sur la figure 6).

Nous avons décrit ci-dessus l'utilisation de la linéarisation des pics de la fonction de transfert optique pour la recherche des aberrations, une fois celle-ci déterminée on peut les utiliser pour remonter à l'objet, notamment lorsque ce dernier est inconnu.

Exemple 3

En utilisant l'expression de l'objet exprimée par l'équation (9) en fonction des aberrations, on peut une fois les aberrations estimées- les réinjecter dans l'expression pour retrouver l'objet.

Il est bien entendu possible d'affiner la recherche de l'objet par une éventuelle opération de filtrage, la gestion des effets de bord, etc.

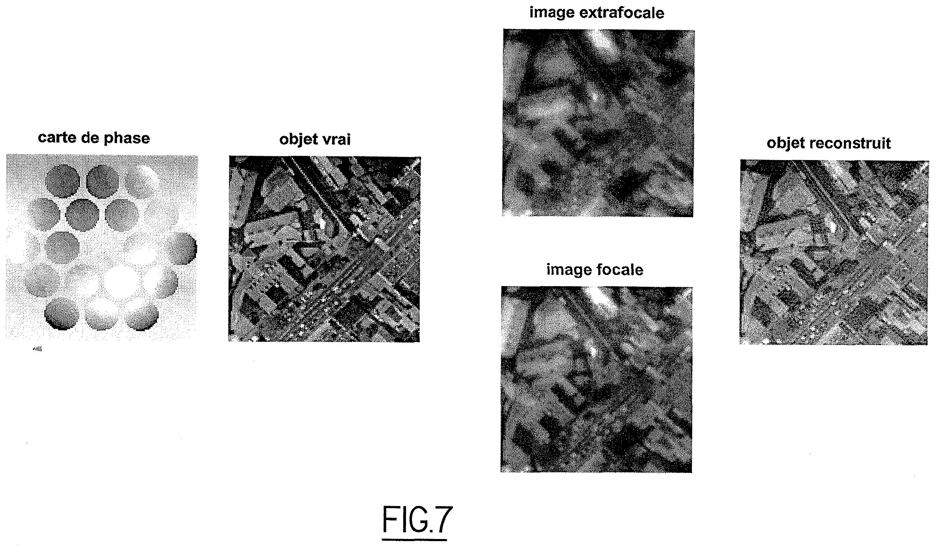

La figure 7 illustre l'estimation de l'objet observé par un système optique composé de dix-huit sous-pupilles. Cette pupille (composée de sous-pupilles) est très proche de celle d'un télescope monolithique, ce qui montre que le dispositif actuel pourrait s'appliquer à un tel télescope avec des sous-pupilles hexagonales par exemple.

On illustre un cas où l'instrument d'observation est affecté par une perturbation de phase égale à $\lambda/10$, résultant d'un tirage aléatoire sur huit modes de Zernike (défocalisation, deux astigmatismes, deux comas, deux comas triples, aberration sphérique).

Deux images sont simulées à partir de cette hypothèse de phase sur l'instrument et d'un objet de référence : une image dans le plan focal et une image dans un plan défocalisé de 1 rad rms, avec un bon rapport signal à bruit.

A partir de ces deux images, uniquement, la perturbation de phase est estimée sur les sous-pupilles (en piston-tip-tilt uniquement).

L'objet est ensuite reconstruit par déconvolution de l'image mesurée en plan focal, en utilisant la phase estimée.

La figure 7 montre que l'objet ainsi estimé par simple traitement numérique est très voisin de l'objet observé, en particulier que les détails (voitures sur le parking par exemple) sont beaucoup plus nets que sur l'image focale sans traitement.

**Revendications**

1. Procédé d'estimation d'au moins une déformation (10) du front d'onde d'un système d'observation (20) ou d'un objet observé par ledit système d'observation (20), consistant en ce que

   - on acquiert, au voisinage du plan focal du système d'observation, au moins une image de diversité (26-28) dans au moins un plan de diversité, l'image de diversité comprenant une déformation de diversité connue ; et **caractérisé en ce que** dans chaque plan de diversité ;
   - on détermine un modèle d'image fondé sur au moins

     - une décomposition de la transmission pupillaire de la pupille physique du système en une pluralité de sous-pupilles ;
     - une décomposition sur chaque sous-pupilles de la déformation recherchée sous la forme d'au moins une déformation connue pondérée par des coefficients à déterminer ;
     - une détermination de la fonction de transfert optique du système (20) par autocorrélation de la transmission pupillaire de sa pupille ;
     - la linéarisation, dans dite fonction de transfert optique, de chacun des termes de l'autocorrélation en fonction des coefficients de la déformation recherchée, la linéarisation étant effectuée au voisinage de la déformation de diversité connue ;
     - l'objet observé et du bruit ;

   et **en ce que** à partir du ou des modèle(s) d'image(s) déterminé(s) et de la ou les image(s) acquise(s), on estime la ou les déformation(s) recherchée(s) ou l'objet observé.

2. Procédé selon la revendication 1, **caractérisé en ce que** la ou les déformation(s) ou l'objet à estimer minimise(nt) un critère d'estimation quadratique.

3. Procédé selon l'une des revendications précédentes, **caractérisé en ce que** les sous-pupilles sont circulaires ou hexagonales ou carrées.

4. Procédé selon l'une des revendications précédentes, **caractérisé en ce que** les déformations sont exprimées dans la base de Zernike.

5. Procédé selon l'une des revendications précédentes, **caractérisé en ce que** la déformation de diversité est quelconque.

6. Procédé selon l'une des revendications précédentes, **caractérisé en ce que** si la ou les déformation(s) recherchée(s) est ou sont

- un piston, la linéarisation de la fonction de transfert dans chaque plan de diversité est exacte ;
- quelconque(s), la linéarisation de la fonction de transfert dans chaque plan de diversité est approchée.

7. Procédé selon l'une des revendications précédentes, **caractérisé en ce qu'**il est destiné à être mis en oeuvre sur un ou plusieurs circuit(s) intégré(s).

8. Procédé selon l'une des revendications précédentes, **caractérisé en ce que** le système d'observation est choisi parmi le groupe suivant : système d'observation optique, microscope électronique, télescope à rayons gamma, imagerie acoustique.

9. Système embarqué comprenant des moyens adaptés pour mettre en oeuvre un procédé selon l'une des revendications 1 à 8.

10. Dispositif d'estimation d'au moins une déformation (10) du front d'onde d'un système d'observation (20) ou d'un objet observé par ledit système d'observation (20), le dispositif comprenant

- des moyens pour acquérir, au voisinage du plan focal du système d'observation, au moins une image de diversité (26-28) dans au moins un plan de diversité, l'image de diversité comprenant une déformation de diversité connue ; et **caractérisé en ce que** dans chaque plan de diversité le dispositif comprend
- des moyens pour déterminer un modèle d'image fondé sur au moins

- une décomposition de la transmission pupillaire de la pupille physique du système en une pluralité de sous-pupilles ;
- une décomposition sur chaque sous-pupilles de la déformation recherchée sous la forme d'au moins une déformation connue pondérée par des coefficients à déterminer ;
- une détermination de la fonction de transfert optique du système (20) par autocorrélation de la transmission pupillaire de sa pupille ;
- la linéarisation, dans dite fonction de transfert optique, de chacun des termes de l'autocorrélation en fonction des coefficients de la déformation recherchée, la linéarisation étant effectuée au voisinage de la déformation de diversité connue ;
- l'objet observé et du bruit ;

et **en ce que** à partir du ou des modèle(s) d'image(s) déterminé(s) et de la ou les image(s) acquise(s), on estime la ou les déformation(s) recherchée(s) ou l'objet observé.

11. Dispositif selon la revendication 10, **caractérisé en ce qu'**il comprend en outre des moyens pour communiquer la ou les déformation(s) recherchée(s) à des moyens de correction du système d'observation.

12. Dispositif selon l'une des revendications 10 à 11, **caractérisé en ce qu'**il comprend en outre des moyens pour acquérir de manière séquentielle la ou les images(s) de diversité.

**Patentansprüche**

1. Verfahren zum Schätzen von mindestens einer Verformung (10) der Wellenfront eines Beobachtungssystems (20) oder eines Gegenstands, der durch das Beobachtungssystem (20) beobachtet wird, umfassend, dass:

- in der Umgebung der Fokalebene des Beobachtungssystems mindestens ein Diversitätsbild (26 - 28) auf mindestens einer Diversitätsebene erfasst wird, wobei das Diversitätsbild eine bekannte Diversitätsverformung umfasst; und **dadurch gekennzeichnet, dass** auf jeder Diversitätsebene:
- ein Bildmodell auf dem Hintergrund von mindestens Folgenden bestimmt wird

-- einem Abbau der Pupillenübertragung der physischen Pupille des Systems in eine Vielzahl von Unterpupillen;

-- einem Abbau auf jeder Unterpupille der Verformung, gesucht in Form von mindestens einer bekannten Verformung, gewichtet durch zu bestimmende Koeffizienten;

-- einer Bestimmung der optischen Übertragungsfunktion des Systems (20) durch Autokorrelation der Übertragung ihrer Pupille;

-- der Linearisierung in der Funktion der optischen Übertragung jedes der Werte der Autokorrelation je nach den Koeffizienten der gesuchten Verformung, wobei die Linearisierung in der Umgebung der bekannten Diversitätsverformung durchgeführt wird;

-- dem beobachteten Gegenstand und Rauschen;

und dadurch, dass ausgehend von dem oder den bestimmten Bildmodell(en) und dem oder den erfassten Bilder(n) die gesuchte(n) Verformung(en) oder der beobachtete Gegenstand geschätzt wird/werden.

2. Verfahren nach Anspruch 1, **dadurch gekennzeichnet, dass** der oder die Verformung(en) oder der zu bestimmende Gegenstand ein Kriterium der quadratischen Schätzung minimiert/minimieren.

3. Verfahren nach einem der vorhergehenden Ansprüche, **dadurch gekennzeichnet, dass** die Unterpupillen rund oder hexagonal oder quadratisch sind.

4. Verfahren nach einem der vorhergehenden Ansprüche, **dadurch gekennzeichnet, dass** die Verformungen in der Zernike-Base exprimiert sind.

5. Verfahren nach einem der vorhergehenden Ansprüche, **dadurch gekennzeichnet, dass** die Diversitätsverformung beliebig ist.

6. Verfahren nach einem der vorhergehenden Ansprüche, **dadurch gekennzeichnet, dass**, wenn die gesuchte(n) Verformung(en) Folgendes ist oder sind

- ein Kolben, die Linearisierung der Übertragungsfunktion auf jeder Diversitätsebene exakt ist;
- beliebig, die Linearisierung der Übertragungsfunktion auf jeder Diversitätsebene annähernd ist.

7. Verfahren nach einem der vorhergehenden Ansprüche, **dadurch gekennzeichnet, dass** es dazu bestimmt ist, auf einer oder mehreren integrierten Schaltung(en) durchgeführt zu werden.

8. Verfahren nach einem der vorhergehenden Ansprüche, **dadurch gekennzeichnet, dass** das Beobachtungssystem ausgewählt ist aus der folgenden Gruppe: optisches Beobachtungssystem, Elektronenmikroskop, Gammastrahlenteleskop, akustische Abbildung.

9. Bordeigenes System, umfassend Mittel, die ausgelegt sind, um ein Verfahren nach einem der Ansprüche 1 bis 8 durchzuführen.

10. Vorrichtung zum Schätzen von mindestens einer Verformung (10) der Wellenfront eines Beobachtungssystems (20) oder eines Gegenstands, der durch das Beobachtungssystem (20) beobachtet wird, wobei die Vorrichtung Folgendes umfasst

- Mittel zum Erfassen, in der Umgebung der Fokalebene des Beobachtungssystems, von mindestens einem Diversitätsbild (26 - 28) auf mindestens einer Diversitätsebene, wobei das Diversitätsbild eine bekannte Diversitätsverformung umfasst; und **dadurch gekennzeichnet, dass** auf jeder Diversitätsebene die Vorrichtung Folgendes umfasst

- Mittel, um ein Bildmodell auf dem Hintergrund von mindestens Folgendem zu bestimmen

-- einem Abbau der Pupillenübertragung der physischen Pupille des Systems in eine Vielzahl von Unterpupillen;

-- einem Abbau auf jeder Unterpupille der gesuchten Verformung in Form von mindestens einer bekannten Verformung, gewichtet durch zu bestimmende Koeffizienten;

-- einer Bestimmung der optischen Übertragungsfunktion des Systems (20) durch Autokorrelation der Übertragung ihrer Pupille;

-- der Linearisierung in der Funktion der optischen Übertragung jedes der Werte der Autokorrelation je nach den Koeffizienten der gesuchten Verformung, wobei die Linearisierung in der Umgebung der bekannten Diversitätsverformung durchgeführt wird;
-- dem beobachteten Gegenstand und Rauschen;

und dadurch, dass ausgehend von dem oder den bestimmten Bildmodell(en) und dem oder den erfassten Bilder(n) die gesuchte(n) Verformung(en) oder der beobachtete Gegenstand geschätzt wird/werden.

**11.** Vorrichtung nach Anspruch 10, **dadurch gekennzeichnet, dass** sie außerdem Mittel umfasst, um die gesuchte(n) Verformung(en) an Mittel zur Korrektur des Beobachtungssystems zu übertragen.

**12.** Verfahren nach einem der Ansprüche 10 bis 11, **dadurch gekennzeichnet, dass** es außerdem Mittel umfasst, um auf sequenzielle Weise das oder die Diversitätsbild(er) zu erfassen.

## Claims

**1.** Method for estimating at least one deformation (10) of the wave front of an observation system (20) or an object observed by said observation system (20), consisting in that:

- at least one diversity image (26-28) is acquired close to the focal plane of the observation system, in at least one diversity plane, the diversity image comprising a deformation with known diversity; and **characterised in that** in each diversity plane:
- a model of an image is determined based on at least

-- a decomposition of the pupillary transmission of the physical pupil of the system into a plurality of sub-pupils;
-- a decomposition on each sub-pupil of the required deformation in the form of a least one known deformation weighted by coefficients to be determined:
-- a determination of the optical transfer function of the system (20) by self-correlation of the pupillary transmission of its pupil;
-- linearization of each self-correlation term in said optical transfer function, as a function of the required deformation coefficients, linearization being done close to the deformation with known diversity;

- the observed object and noise;

and **in that** the required deformation(s) or the observed object are estimated from the determined image model(s) and the acquired image(s).

**2.** Method according to claim 1, **characterised in that** the deformation (s) or the object to be estimated minimise(s) a quadratic estimation function.

**3.** Method according to one of the previous claims, **characterised in that** the sub-pupils are circular or hexagonal or square.

**4.** Method according to one of the previous claims, **characterised in that** the deformations are expressed in the Zernike base.

**5.** Method according to one of the previous claims, **characterised in that** the diversity deformation is arbitrary.

**6.** Method according to one of the previous claims, **characterised in that** the required deformation(s) is or are:

- a piston, linearization of the transfer function in each diversity plane is exact;
- arbitrary, linearization of the transfer function in each diversity plane is approximate.

**7.** Method according to one of the previous claims, **characterised in that** it will be used on one or several integrated circuit(s).

**8.** Method according to one of the previous claims, **characterised in that** the observation system is chosen from among the group composed of the optical observation system, electron microscope, telescope with gamma rays, acoustic imagery.

9. Onboard system comprising means adapted to implement a method according to one of claims 1 to 8.

10. Device for estimating at least one deformation (10) of the wave front of an observation system (20) or an object observed by said observation system (20), the device comprising:

- means of acquiring at least one diversity image (26-28) close to the focal plane of the observation system, in at least one diversity plane, the diversity image comprising a deformation with known diversity; and **characterised in that** in each diversity plane the device comprises:
- means of determining a model of an image based on at least

-- a decomposition of the pupillary transmission of the physical pupil of the system into a plurality of sub-pupils;
-- a decomposition on each sub-pupil of the required deformation in the form of a least one known deformation weighted by coefficients to be determined:
-- a determination of the optical transfer function of the system (20) by self-correlation 2 of the pupillary transmission of its pupil;
-- linearization of each self-correlation term in said optical transfer function, as a function of the required deformation coefficients, linearization being done close to the deformation with known diversity;
-- the observed object and noise;

and **in that** the required deformation(s) or the observed object are estimated from the determined image model(s) and the acquired image(s).

11. Device according to claim 10, **characterised in that** it also comprises means of communicating the required deformation(s) to correction means of the observation system.

12. Device according to one of claims 10 or 11, **characterised in that** it also comprises means of acquiring the diversity image(s) in a sequential manner.

FIG.1

FIG.2

FIG.3

FIG.4a

FIG.4b

30

FIG.5

30

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040052426 A

**Littérature non-brevet citée dans la description**

- **G. ROUSSET.** Wave-front sensors, Adaptive Optics in Astronomy. Cambridge University Press, 1999, 91-130